# EUROPÄISCHE PATENTSCHRIFT

(11) **EP 4 170 296 B1**
(45) Veröffentlichungstag und Bekanntmachung des Hinweises auf die Patenterteilung: **11.10.2023**
(21) Anmeldenummer: 21204188.3
(22) Anmeldetag: 22.10.2021
(51) Int. Cl.: G01F 1/66, G01F 1/667, G10K 11/00, G10K 11/04, G10K 11/16

(54) **ULTRASCHALLWANDLER UND ULTRASCHALLDURCHFLUSSMESSGERÄT**
ULTRASONIC TRANSDUCER AND ULTRASONIC FLOWMETER
CONVERTISSEUR ULTRASONIQUE ET DÉBITMÈTRE ULTRASONIQUE

(43) Veröffentlichungstag der Anmeldung: 26.04.2023
(73) Patentinhaber: Krohne AG, 4019 Basel (CH); Technische Universiteit Delft, 2628 CN Delft (NL)
(72) Erfinder: Aragón, Alejandro Marcos, 2613 DX Delft (NL); Valappil, Sabiju Valiya, 2624 XJ Delft (NL); Hogendoorn, Cornelis Johannes, 4211 BG Spijk (NL)
(74) Vertreter: Gesthuysen Patentanwälte

(56) Entgegenhaltungen:
- CN-A- 109 036 367
- CN-A- 113 187 840
- US-A- 4 417 480
- US-A1- 2017 307 425
- US-B2- 11 074 901

## Beschreibung

Die Erfindung betrifft einen Ultraschallwandler für ein Ultraschalldurchflussmessgerät, mit einem Wandlergehäuse und mit einem in dem Wandlergehäuse angeordneten Wandlerelement zum Erzeugen und/oder Empfangen von Ultraschallsignalen zumindest in einem Nutz-Frequenzbereich des Ultraschallwandlers, wobei das Wandlergehäuse im Bereich des Wandlerelements ein Ultraschallfenster zum Übertragen der Ultraschallsignale zwischen dem Innenraum und dem Außenraum des Wandlergehäuses aufweist, wobei das Wandlergehäuse einen Befestigungsabschnitt zur Befestigung des Ultraschallwandlers an einem Messrohr aufweist, und wobei sich das Wandlergehäuse mit einem Übergangsabschnitt zwischen dem Ultraschallfenster und dem Befestigungsabschnitt erstreckt. Zudem betrifft die Erfindung auch ein Ultraschalldurchflussmessgerät mit wenigstens zwei der zuvor beschriebenen Ultraschallwandler sowie mit einem Messrohr.

Ultraschalldurchflussmessgeräte der zuvor genannten Art sind in vielfältiger Form aus dem Stand der Technik bekannt und dienen der Bestimmung des Durchflusses eines strömenden Mediums durch das Messrohr. Ultraschalldurchflussmessgeräte weisen hierzu in der Regel wenigstens zwei Ultraschallwandler auf, die als Ultraschallsender und/oder Ultraschallempfänger ausgebildet und in Strömungsrichtung des Mediums gesehen voneinander beabstandet angeordnet sind (axial bezogen auf die Messrohrachse). Um den Durchfluss zu bestimmen, wird ein Ultraschallsignal entlang eines Signalpfades zwischen den Ultraschallwandlern einmal in Strömungsrichtung des Mediums und einmal entgegen der Strömungsrichtung des Mediums ausgesendet und die Laufzeit des Ultraschallsignals bzw. der Ultraschallsignale bestimmt, die sich aufgrund des Mitführeffekts des Mediums voneinander unterscheiden. Aus dem Laufzeitunterschied lässt sich die Strömungsgeschwindigkeit des Mediums bestimmen und aus der Strömungsgeschwindigkeit und dem Messrohrquerschnitt ergibt sich der Volumendurchfluss des Mediums.

Die Ultraschallsignale werden von dem im Wandlergehäuse angeordneten Wandlerelement erzeugt und empfangen. Die Wandlerelemente sind meist durch elektromechanische Bauelemente realisiert, deren Wirkprinzip auf dem piezoelektrischen Effekt beruht, sodass ein und dasselbe Wandlerelement gleichzeitig als Sende- und Empfangselement dienen kann. Die Ultraschallsignale werden über das Ultraschallfenster des Wandlergehäuses in das Messrohr ausgesendet bzw. über das Ultraschallfenster des Wandlergehäuses empfangen.

Ein in Rede stehendes Ultraschalldurchflussmessgerät ist beispielsweise aus der US 2017/0307425 A1 bekannt.

Das Ultraschallfenster des Wandlergehäuses ist häufig akustisch optimiert, beispielsweise durch eine geeignet gewählte Dicke und/oder durch zusätzliche Anpassungsschichten. Das Ultraschallfenster kann also für eine akustische Impedanzanpassung sorgen, sodass eine bessere Übertragung von Ultraschallwellen in das Medium und aus dem Medium erfolgt. Hilfreich für die Impedanzanpassung ist dabei, dass der Nutz-Frequenzbereich der verwendeten Ultraschallsignale bekannt ist, sodass diese Randbedingung für die Auslegung der Impedanzanpassung berücksichtigt werden kann.

Ultraschallsignale werden jedoch nicht nur als Nutzsignale über das Medium von einem Ultraschallwandler zum anderen Ultraschallwandler übertragen, sondern breiten sich auch als parasitäre Gehäusewellen in den konstruktiven Bestandteilen des Ultraschalldurchflussmessgerätes aus, nämlich im Wandlergehäuse und im Messrohr. Dieser Umstand wird als Übersprechen (crosstalk) bezeichnet.

Problematisch am Übersprechen ist, dass der empfangende Ultraschallwandler nicht unterscheiden kann, ob das empfangene Ultraschallsignal ein eigentlich interessierendes Nutzsignal oder ein durch die Gehäusewellen bedingtes Störsignal ist, bzw. dass es zu einer Überlagerung des Nutzsignals und des Störsignals kommt, mit der Folge eines schlechten Signal-Rausch-Verhältnisses, mehrdeutiger Messsituationen und reduzierter Messgenauigkeit.

In Medien mit niedrigem Wellenwiderstand, wie beispielsweise Gasen oder Dämpfen sowie Flüssigkeiten mit hoher Viskosität, wird das ausgesendete Ultraschallsignal durch das Medium stark abgeschwächt, sodass nur ein schwaches Ultraschallsignal (Messsignal) am empfangenden Ultraschallwandler ankommt. Insbesondere in solchen Fällen ist das Überlagern des Nutzsignals mit vom Übersprechen bedingten Störsignalen problematisch.

Aus dem Stand der Technik sind verschiedene Maßnahmen zur Reduzierung des Übersprechens bekannt. Aus der EP 2 148 322 B1 ist beispielsweise bekannt, in dem Wandlergehäuse wenigstens einen mechanischen Resonator auszubilden, den die Gehäusewellen bei ihrer Ausbreitung zwangsläufig durchlaufen müssen. Der mechanische Resonator wird durch die Gehäusewellen zu Schwingungen angeregt, die Energie der Gehäusewellen wird somit lokal gefangen und das Übersprechen reduziert.

Aus der EP 1 340 964 B1 ist eine Ausgestaltung bekannt, bei der ein mechanisches Schallfilter in dem Wandlergehäuse eines Ultraschallwandlers ausgebildet ist. Der Schallfilter weist einen Torsionsring auf, welcher durch Gehäusewellen zu Torsionsbewegungen angeregt wird. Der Schallfilter ist derart ausgelegt, dass bei Frequenzen im Arbeitsbereich des Ultraschallwandlers ein nahezu bewegungsfreier Zustand des Torsionsrings erreicht wird, wodurch das Übersprechen reduziert wird.

Nachteilig an der Ausbildung von mechanischen Resonatoren und mechanischen Schallfiltern ist zum einen die Komplexität der Strukturen, mit der ein erhöhter Produktions- und Kostenaufwand verbunden ist und zum anderen, dass die Wirkweise der mechanischen Konstruktionen auf bestimmte Frequenzen der Ultraschallsignale abgestimmt sind, sodass nur Gehäusewellen in einem schmalen Frequenzbereich "ausgefiltert" werden.

Der Erfindung liegt demnach die Aufgabe zugrunde, den eingangs beschriebenen Ultraschallwandler und das eingangs beschriebene Ultraschalldurchflussmessgerät so weiter zu entwickeln, dass auf effiziente und kostengünstige Weise die Ausbreitung von Gehäusewellen und damit das Übersprechen verhindert oder zumindest minimiert werden kann.

Die Aufgabe ist bei dem erfindungsgemäßen Ultraschallwandler zunächst dadurch gelöst, nämlich mit den Merkmalen des Kennzeichnungsteils des Patentanspruchs 1, dass der Übergangsabschnitt des Wandlergehäuses in einem Dämpfungsbereich wenigstens einen phononischen Kristall mit einer akustischen Bandlücke in dem Nutz-Frequenzbereich des Ultraschallwandlers aufweist, sodass die Übertragung von Ultraschallsignalen im Nutz-Frequenzbereich zwischen dem Ultraschallfenster und dem Befestigungsabschnitt zumindest gedämpft ist.

Unter phononischen Kristallen werden Materialien verstanden, die eine makroskopische periodische Struktur aufweisen, die analog zu einer mikroskopischen Kristallstruktur ausgebildet ist, eine mikroskopische Kristallstruktur wird also makroskopisch nachempfunden. Durch eine geeignete Dimensionierung der makroskopischen phononischen Kristallstruktur lässt sich realisieren, dass der phononische Kristall mechanische und akustische Wellen einer bestimmten Wellenlänge oder in einem begrenzten Wellenlängenbereich und damit Schwingungen einer bestimmten Frequenz oder entsprechend in einem begrenzten Frequenzbereich nicht - oder nur stark gedämpft - überträgt. Hinsichtlich der Übertragung dieser mechanischen und akustischen Wellen weist der phononische Kristall also eine Bandlücke in dem betreffenden Frequenzbereich auf. Durch die periodische strukturelle Ausgestaltung phononischer Kristalle wechseln sich Bereiche unterschiedlicher Dichte und/oder Elastizität ab, wodurch gezielt Bandlücken auch im Ultraschallbereich, hier also im Nutz-Frequenzbereich der Ultraschallwellen des betrachteten Ultraschallwandlers, eingestellt werden können. Der der Dämpfung im Wesentlichen zugrunde liegende physikalische Mechanismus ist die Bragg-Streuung der mechanischen und akustischen Wellen an der periodischen Struktur des phononischen Kristalls.

Die Untersuchung des Schwingungsverhaltens der periodischen Strukturen der phononischen Kristalle kann vor der tatsächlichen technischen Realisierung erfolgen, wenn Geometrie und verwendetes Material bekannt sind. Hierzu können zum einen Methoden der Festkörperphysik herangezogen werden, die zur Beschreibung von Kristallstrukturen bekannt sind, also beispielsweise das Arbeiten mit Einheitszellen, Brillouin-Zonen und Bravais-Gittern. Zum anderen kann das Schwingungsverhalten der gewünschten Geometrien durch numerische Simulationen (zum Beispiel Finite-Elemente-Methode, Boundary-Element-Methode) untersucht werden. So kann zum Beispiel das Schwingungs- bzw. das Dämpfungsverhalten des phononischen Kristalls für alle interessierenden Schwingungsmoden und Frequenzen untersucht werden.

Indem nun in dem Übergangsabschnitt zwischen dem Ultraschallfenster und dem Befestigungsabschnitt in einem Dämpfungsbereich die zuvor beschriebenen phononischen Kristalle verwendet werden, wird die Übertragung von Ultraschallwellen im Nutz-Frequenzbereich des Ultraschallwandlers über das Wandlergehäuse erschwert. Da parasitäre Ultraschallwellen in einem Ultraschalldurchflussmessgerät von einem Ultraschallwandler zu einem anderen Ultraschallwandler zwingend auch die Wandlergehäuse der beteiligten Ultraschallwandler durchlaufen müssen, stellt die erfindungsgemäße Maßnahme der Verwendung von phononischen Kristallen im Dämpfungsbereich des Wandlergehäuses eine effektive Maßnahme dar, parasitäre Ultraschallwellen zu unterdrücken. Es ist sinnvoll, die Bandlücke der phononischen Kristalle in den Nutz-Frequenzbereich des Ultraschallwandlers zu legen. Störsignale im Nutz-Frequenzbereich sind praktisch nicht unterscheidbar von Nutzsignalen, jedenfalls nicht hinsichtlich eines einfachen Frequenzkriteriums, Störsignale in anderen Frequenzbereichen können aber beispielsweise auch durch elektronische Filterung bei der Signalauswertung ausgefiltert werden.

Wenn vorliegend von einer akustischen Bandlücke die Rede ist, dann ist hiermit nicht eine solche Bandlücke gemeint, mit der nur akustische Schwingungsmoden ausgefiltert oder gedämpft werden. Vielmehr werden sämtliche Schwingungsmoden, also sowohl die akustischen als auch die optischen Schwingungsmoden, ausgefiltert oder gedämpft.

Bei einer bevorzugten Ausgestaltung des Ultraschallwandlers und des Ultraschalldurchflussmessgerätes unter Verwendung dieses Ultraschallwandlers ist vorgesehen, dass der Dämpfungsbereich zumindest entlang einer geschlossenen Umfangslinie im Übergangsabschnitt ausgebildet ist, sodass jeder Weg zwischen dem Ultraschallfenster und dem Befestigungsabschnitt des Wandlergehäuses durch den Dämpfungsbereich führt. Durch diese Maßnahme ist jede Gehäusewelle, die potenziell dazu geeignet ist, von dem Wandlerelement eines Ultraschallwandlers zu dem Wandlerelement eines anderen Ultraschallwandlers zu gelangen, gezwungen, einmal den phononischen Dämpfungsbereich zu durchlaufen, bzw. sie trifft einmal auf einen solchen Dämpfungsbereich. Es ist also nicht möglich, dass eine schädliche Gehäusewelle den geschlossenen Dämpfungsbereich umläuft.

Eine weitere bevorzugte Ausgestaltung des Ultraschallwandlers und des Ultraschalldurchflussmessgerätes unter Verwendung dieses Ultraschallwandlers zeichnet sich dadurch aus, dass der Dämpfungsbereich im Befestigungsabschnitt ausgebildet ist. Potenziell schädliche Gehäusewellen gelangen meist über das Messrohr von einem Ultraschallwandler zu einem anderen Ultraschallwandler. Da die Ultraschallwandler voraussetzungsgemäß über ihren Befestigungsabschnitt zumindest mittelbar mit dem Messrohr verbunden sind, wird auch durch diese vorgeschlagene Maßnahme jede Gehäusewelle gezwungen, den dort vorgesehenen Dämpfungsbereich zu durchlaufen, wodurch die Gehäusewelle effektiv gedämpft wird.

Eine vorteilhafte Weiterbildung des Ultraschallwandlers und des Ultraschalldurchflussmessgerätes unter Verwendung dieses Ultraschallwandlers ist dadurch gekennzeichnet, dass der phononische Kristall eine geschlossene Hülle aufweist zur Abdichtung des Außenraums gegenüber dem Innenraum des Wandlergehäuses. Phononische Kristalle können beispielsweise aus einem einphasigen Material realisiert werden, oder können beispielsweise aus einem zweiphasigen Material hergestellt werden. Insbesondere dann, wenn einphasiges Material verwendet wird, sind die Strukturen, mit denen die phononischen Kristalle realisiert werden, in der Regel nicht geschlossen, sondern gewissermaßen offenporig. Demzufolge sind sie in diesem Fall nicht geeignet, eine dichte Barriere zwischen dem Außenraum und dem Innenraum des Wandlergehäuses zu realisieren, wobei die Dichtigkeit gegenüber dem Medium im Messrohr gewährleistet sein muss. Phononische Kristalle insbesondere aus einphasigem Material werden beispielsweise durch regelmäßige Anordnungen von Massepunkten, also beispielsweise von kleinen "Kügelchen", und durch diese Massepunkte verbindende konstruktive Stege realisiert. Zwischen den benachbarten Massepunkten ist dann - je nach Dimensionierung - schlicht ein Freiraum, durch den ein Fluid dringen kann. Mit der vorgeschlagenen Hülle wird die gewünschte Dichtigkeit des phononischen Kristalls erzielt. Die die Massepunkte verbindenden konstruktiven Stege erfüllen neben der Verbindung der Massepunkte zudem die Funktion, die Steifigkeit der Anordnung und damit deren mechanische Festigkeit zu erhöhen. Da der Ultraschallwandler im Betrieb je nach Prozessbedingungen hohen Drücken ausgesetzt ist, ist eine ausreichende mechanische Festigkeit notwendig. Des Weiteren kann durch die Dimensionierung der Stege und der Massepunkte die Massenfehlanpassung zwischen den Stegen und den Massepunkten eingestellt bzw. beeinflusst werden. Je höher der Dimensionskontrast zwischen den Massepunkten und den Stegen ist, desto höher ist der Frequenzbereich der Bandlücke des phononischen Kristalls.

Vorzugsweise ist bei der geschlossenen Hülle vorgesehen, die Hülle durch Hüllenmaterial in den Zwischenräumen zwischen den periodisch angeordneten Strukturelementen des phononischen Kristalls zu realisieren, insbesondere in den Zwischenräumen zwischen den die Außenschicht des phononischen Kristalls bildenden Strukturelementen des phononischen Kristalls, bevorzugt durch Hüllenmaterial, das identisch ist mit dem Material des phononischen Kristalls. Bei Verwendung des Materials des phononischen Kristalls auch für die Hülle kann die Fertigung des phononischen Kristalls und der ihn abdichtenden Hülle gleichzeitig erfolgen, was in verschiedener Hinsicht vorteilhaft ist.

Um die mechanische Festigkeit des Ultraschallwandlers im Dämpfungsbereich weiter zu erhöhen, ist in einer bevorzugten Variante des Ultraschallwandlers vorgesehen, dass Versteifungselemente - besonders bevorzugt in Form von Versteifungsplatten - in den Dämpfungsbereich integriert sind, wobei jedes Versteifungselement wenigstens zwischen zwei Massepunkten des phononischen Kristalls angeordnet ist. Besonders bevorzugt sind die Versteifungselemente zwischen nicht unmittelbar benachbarten Massepunkten angeordnet. Die genaue Anzahl der Versteifungselemente sowie deren genaue Anordnung ist abhängig von der gewünschten mechanischen Festigkeit sowie von der Anordnung der Massepunte in dem phononischen Kristall.

Bei einer weiteren vorteilhaften Ausgestaltung des Ultraschallwandlers und des Ultraschalldurchflussmessgerätes unter Verwendung dieses Ultraschallwandlers ist vorgesehen, dass der phononische Kristall eine einfache kubische Anordnung oder eine hexagonale Anordnung aufweist. Die Strukturen sind einfach und gut zu fertigen. Die hexagonale Anordnung zeichnet sich gegenüber anderen Geometrien zudem dadurch aus, dass hohe mechanische Festigkeiten mit geringem Materialeinsatz erzielbar sind.

Bei einer einfachen kubischen Anordnung sind die Versteifungselemente - sofern vorgesehen - besonders bevorzugt zwischen diagonal gegenüberliegenden Massepunkten angeordnet. Bei einer hexagonalen Anordnung sind in einer Variante die Versteifungselemente - sofern vorgesehen - besonders bevorzugt zwischen zwei Massepunkten mit maximalem Abstand in der hexagonalen Anordnung angeordnet. In einer weiteren Variante verbindet ein Versteifungselement bevorzugt einen Massepunkt mit seinem übernächsten Nachbarn.

Eine weitere Fortentwicklung des Ultraschallwandlers und des Ultraschalldurchflussmessgerätes unter Verwendung dieses Ultraschallwandlers zeichnet sich dadurch aus, dass der Dämpfungsbereich wenigstens zwei phononische Kristalle mit voneinander verschiedenen akustischen Bandlücken aufweist, insbesondere wobei die voneinander verschiedenen akustischen Bandlücken benachbart zueinander sind. Durch diese Maßnahme ist es möglich, den Dämpfungsbereich mit mehreren Bandlücken zu versehen. Wenn die Bandlücken frequenzmäßig benachbart sind, ist es möglich, zwei Bandlücken zu einer breitbandigeren Bandlücke verschmelzen zu lassen. Dieser Effekt wird am wirkungsvollsten umgesetzt, wenn die wenigstens zwei phononischen Kristalle in Ausbreitungsrichtung der Ultraschallsignale durch den Dämpfungsbereich gesehen hintereinander angeordnet sind.

Es hat sich herausgestellt, dass phononische Kristalle mit generativen Fertigungsverfahren in guter Güte (hohe Wiederholgenauigkeit bei der Fertigung sich periodisch wiederholender Strukturen) hergestellt werden können, jedenfalls für Bandlücken im Ultraschallbereich. Insoweit zeichnen sich bevorzugte Ausgestaltungen des Ultraschallwandlers dadurch aus, dass zumindest der Dämpfungsbereich durch ein generatives Fertigungsverfahren hergestellt ist, insbesondere durch 3D-Druck hergestellt ist.

Besonders bevorzugt ist zumindest der Dämpfungsbereich aus korrosionsfestem Stahl oder aus Titan gefertigt.

Bei dem erfindungsgemäßen Ultraschalldurchflussmessgerät muss wenigstens einer der beiden Ultraschallwandler, wie zuvor beschrieben, ausgestaltet sein, denn schon dann ist sichergestellt, dass jedenfalls eine Schallbarriere zwischen den beiden Ultraschallwandlern existiert, um Gehäusewellen zumindest zu dämpfen. Eine bessere Dämpfung kann erzielt werden, wenn beide Ultraschallwandler mit einem phononischen Dämpfungsbereich ausgestattet sind.

Im Einzelnen gibt es nun eine Vielzahl von Möglichkeiten, den erfindungsgemäßen Ultraschallwandler, die erfindungsgemäßen Ultraschalldurchflussmessgeräte und das erfindungsgemäße Messrohr auszugestalten und weiterzubilden. Hierzu wird verwiesen auf die den unabhängigen Patentansprüchen nachgeordneten Patentansprüche sowie auf die Beschreibung bevorzugter Ausgestaltungen in Verbindung mit der Zeichnung. In der Zeichnung zeigen
- Fig. 1: schematisch einen aus dem Stand der Technik bekannten Ultraschallwandler in einer Einbauposition,
- Fig. 2: schematisch ein Ultraschalldurchflussmessgerät mit zwei Ultraschallwandlern,
- Fig. 3: schematisch ein Ausführungsbeispiel eines Ultraschallwandlers mit einem phononischen Kristall im Dämpfungsbereich,
- Fig. 4: schematisch ein weiteres Ausführungsbeispiel eines Ultraschallwandlers mit einen phononischen Kristall im Dämpfungsbereich,
- Fig. 5: schematisch die Elementarzelle eines kubischen phononischen Kristalls,
- Fig. 6: schematisch ein Ausführungsbeispiel eines phononischen Kristalls mit hexagonaler Elementarzellen-Struktur und einer Bandlücke,
- Fig. 7: schematisch ein weiteres Ausführungsbeispiel für einen phononischen Kristall mit hintereinander angeordneten Schichten mit zwei verschiedenen Bandlücken mit unterschiedlichen Frequenzbereichen,
- Fig. 8: einen in 3D-Metalldruck realisierten phononischen Kristall mit geschlossener Außenhülle und
- Fig. 9: einen Querschnitt durch einen phononischen Kristall.

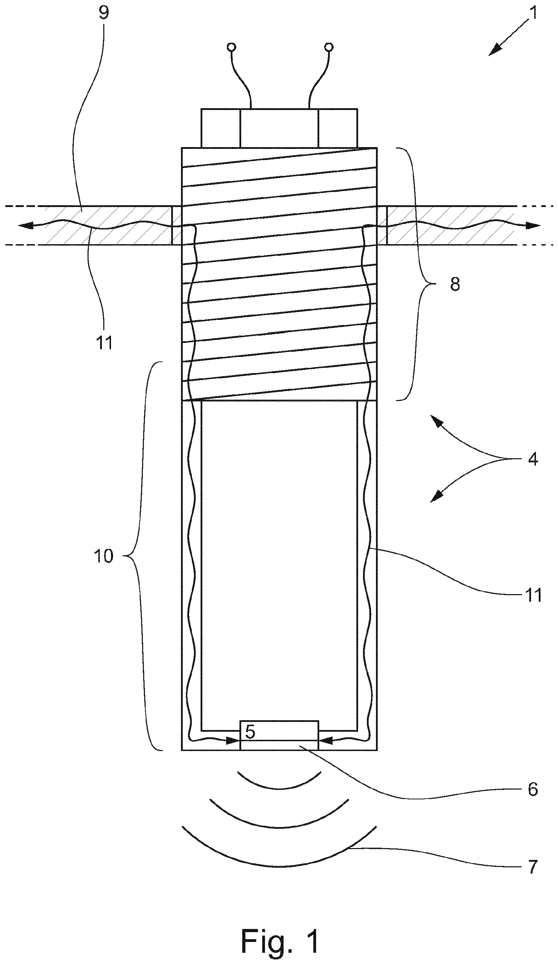

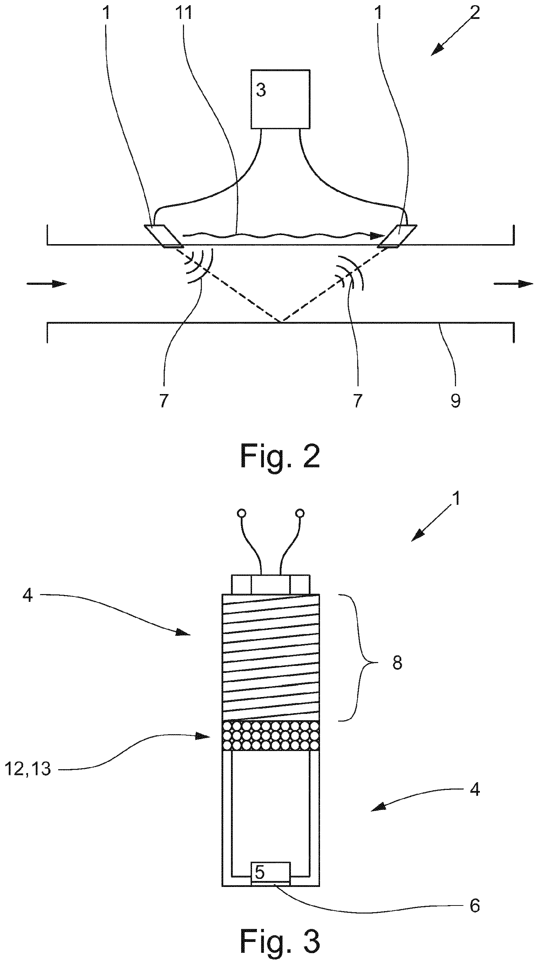

In Fig. 1 ist ein aus dem Stand der Technik bekannter Ultraschallwandler 1 für ein Ultraschalldurchflussmessgerät 2 gezeigt. Fig. 2 stellt ebenfalls den Stand der Technik dar und zeigt ein Ultraschalldurchflussmessgerät 2 mit zwei Ultraschallwandlern 1, die mit einer Steuer- und Auswerteeinheit 3 verbunden sind.

Der in Fig. 1 dargestellte Ultraschallwandler 1 weist ein hülsenförmiges Wandlergehäuse 4 auf. Auf die Form des Wandlergehäuses 4 kommt es nicht an, es sind ganz unterschiedliche Bauformen bei Ultraschallwandlern 1 bekannt. Das Konzept der nachfolgend dargestellten erfindungsgemäßen Maßnahmen zur Ausgestaltung von Ultraschallwandlern 1 (Fig. 3 bis 8) können unabhängig von der äußeren Bauform realisiert werden. Die Darstellung in Fig. 1 (und auch in den anderen Figuren) sind schematisch zu verstehen und sollen die wesentlichen Sachverhalte verdeutlichen. So zeigen die Figuren teilweise den Innenbereich der Ultraschallwandler 1, teilweise aber auch die Ultraschallwandler 1 in einer Draufsicht, insgesamt also im Teilschnitt.

Gemeinsam ist den dargestellten Ultraschallwandlern 1 jedenfalls, dass in dem Wandlergehäuse 4 ein Wandlerelement 5 zum Erzeugen und/oder Empfangen von Ultraschallsignalen angeordnet ist. Hierbei handelt es sich üblicherweise um Piezoelemente. Nicht dargestellt sind weitere Bestandteile von Ultraschallwandlern 1, auf die es hier nicht ankommt, also beispielsweise Verkabelungen, Platinen zur Signalauswertung, Vergüsse usw.

Das Wandlerelement 5 dient jedenfalls zum Erzeugen und/oder Empfangen von Ultraschallsignalen zumindest in einem Nutz-Frequenzbereich des Ultraschallwandlers 1. Das Wandlergehäuse 4 weist dazu im Bereich des Wandlerelements 5 ein Ultraschallfenster 6 zum Übertragen der Ultraschallsignale 7 zwischen dem Innenraum und dem Außenraum des Wandlergehäuses 4 auf. Wie das Ultraschallfenster 6 gestaltet ist, ob es aus einem anderen Material hergestellt ist als aus dem, aus dem das Wandlergehäuse 4 sonst hergestellt ist, ob es Übertragungsschichten zur Realisierung einer geeigneten Impedanzanpassung aufweist usw., ist hier nicht weiter dargestellt, es ist auch nicht von Interesse. Bei den Ultraschallsignalen 7, die in den Außenraum des Wandlergehäuses 4 übertragen werden, oder aus dem Außenraum des Wandlergehäuses durch das Ultraschallfenster 6 zum Wandlerelement 5 übertragen werden, handelt es sich um Nutzsignale, da auf ihnen die Ultraschallmessung beruht.

Das Wandlergehäuse 4 weist einen Befestigungsabschnitt 8 zur Befestigung des Ultraschallwandlers 1 an einem Messrohr 9 auf. In den Fig. 1 und 3 besteht der Befestigungsabschnitt in einem in die Wandung des Wandlergehäuses 4 eingebrachten Gewinde zum Einschrauben des Ultraschallwandlers 1 in seinen Montageort. In anderen Ausführungsbeispielen kann der Befestigungsabschnitt aber auch durch einen an dem Wandlergehäuse 4 ausgebildeten Flansch oder Befestigungsansatz ausgebildet sein.

Problematisch ist bei der Verwendung der hier dargestellten Ultraschallwandler 1, dass zu dem Wandlerelement 5 Ultraschallsignale nicht nur in Form von Nutzsignalen über den Außenraum des Ultraschallwandlers 1 gelangen, sondern auch parasitäre Ultraschallsignale als Gehäusewellen 11 über das Wandlergehäuse 4 zu dem Wandlerelement 5 gelangen. Dies ist aus den zuvor schon geschilderten Gründen problematisch, da die Ultraschallmessung verfälscht werden kann und die Güte der Messung leidet.

In Fig. 2 ist die Messsituation bei einem bekannten Ultraschalldurchflussmessgerät 2 gezeigt, wie es vielfach zur Durchflussmessung verwendet wird. Hier sind zwei Ultraschallwandler 1 in dem Messrohr 9 des Ultraschalldurchflussmessgeräts 2 installiert. Das als Nutzsignal dienende Ultraschallsignal 7 wird in den Außenraum des Ultraschallwandlers 1 emittiert, nämlich in das in dem Messrohr 9 geführte Medium, dessen Strömungsgeschwindigkeit durch die Ultraschallmessung ermittelt werden soll. Der auf der rechten Seite dargestellte empfangende Ultraschallwandler 1 empfängt jedoch nicht nur das Nutzsignal 7, sondern auch die parasitären Ultraschallsignale, die als Gehäusewellen 11 von dem linken Ultraschallwandler 1 zu dem rechten Ultraschallwandler 1 gelangen. Nutz- und Störsignal können sich zeitgleich überlagern und so zu von der Signalform her unsauberen und/oder zu einem zeitlich verschmierten Empfangssignal werden mit schlechtem Signal-Rausch-Abstand, es können aber auch zeitlich versetzte Signale im Nutz-Frequenzbereich empfangen werden, sodass das Messergebnis nicht eindeutig ist.

Zur Lösung des Problems des Signalübersprechens ist bei den Ultraschallwandlern 1 für ein Ultraschalldurchflussmessgerät 2 gemäß den Fig. 3 bis 8 (in unterschiedlichen Teilbereichen und Detaillierungen) vorgesehen, dass der Übergangsabschnitt 10 des Wandlergehäuses 4 in einem Dämpfungsbereich 12 wenigstens einen phononischen Kristall 13 mit einer akustischen Bandlücke im Nutz-Frequenzbereich des Ultraschallwandlers 1 aufweist, so dass die Übertragung von Ultraschallsignalen im Nutz-Frequenzbereich zwischen dem Ultraschallfenster 6 und dem Befestigungsabschnitt 8 über das Wandlergehäuse 4 zumindest gedämpft ist.

Da Störsignale in Form von Gehäusewellen 11 von extern zwingend über den Befestigungsabschnitt 8 und den Übergangsabschnitt 10 zu dem Ultraschallfenster 6 und damit zu dem Wandlerelement 5 gelangen können, wird durch diese Maßnahme zwingend eine Dämpfung von Störsignalen erreicht. Das Gleiche gilt natürlich auch für den umgekehrten Weg, nämlich für Störsignale, die von dem Wandlerelement 5 erzeugt werden und parasitär als Gehäusewellen 11 von dem Bereich des Ultraschallfensters 6 über das Wandlergehäuse 4 über den Übergangsabschnitt 10 zu dem Befestigungsabschnitt 8 gelangen und von dort aus in die konstruktive Peripherie des Ultraschallwandlers gelangen.

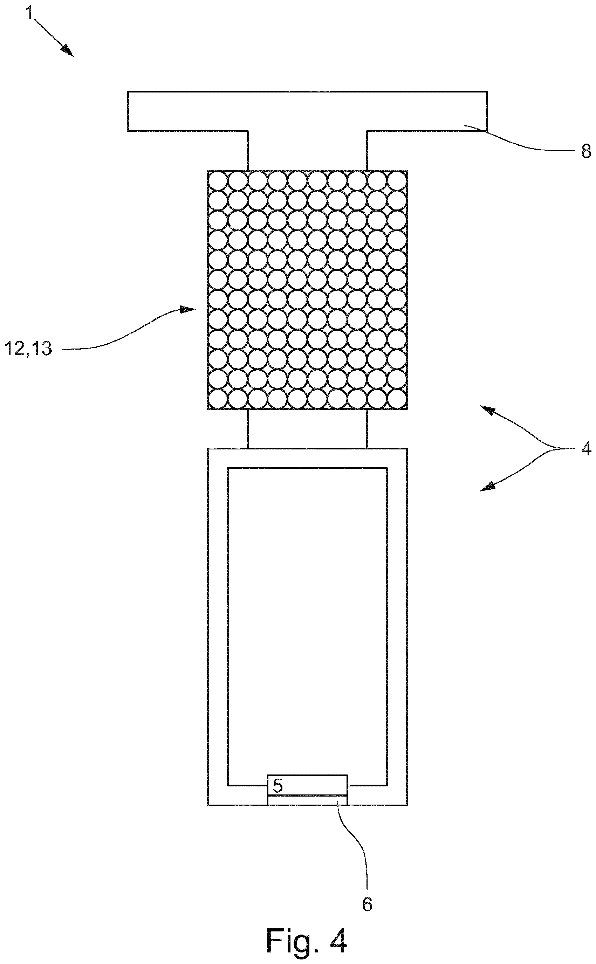

Bei dem Ausführungsbeispiel in Fig. 3 ist der phononische Kristall 13 bündig mit den sonstigen Bestandteilen des Wandlergehäuses 4 verarbeitet. Bei dem Ausführungsbeispiel gemäß Fig. 4 ist der phononische Kristall 13 konstruktiv etwas abgesetzt.

Die Fig. 3 und 4 zeigen die vorteilhafte Ausgestaltung eines Ultraschallwandlers 1, bei dem der Dämpfungsbereich 12 entlang einer geschlossenen Umfangslinie im Übergangsabschnitt 10 ausgebildet ist. Unter dieser Maßgabe führt jeder Weg zwischen dem Ultraschallfenster 6 und dem Befestigungsabschnitt 8 des Wandlergehäuses 4 durch den Dämpfungsbereich 12, sodass im Ergebnis auch zwingend eine bestmögliche Dämpfung erzielt wird, da der Dämpfungsbereich 12 - auch nicht teilweise - von Gehäusewellen umlaufen werden kann.

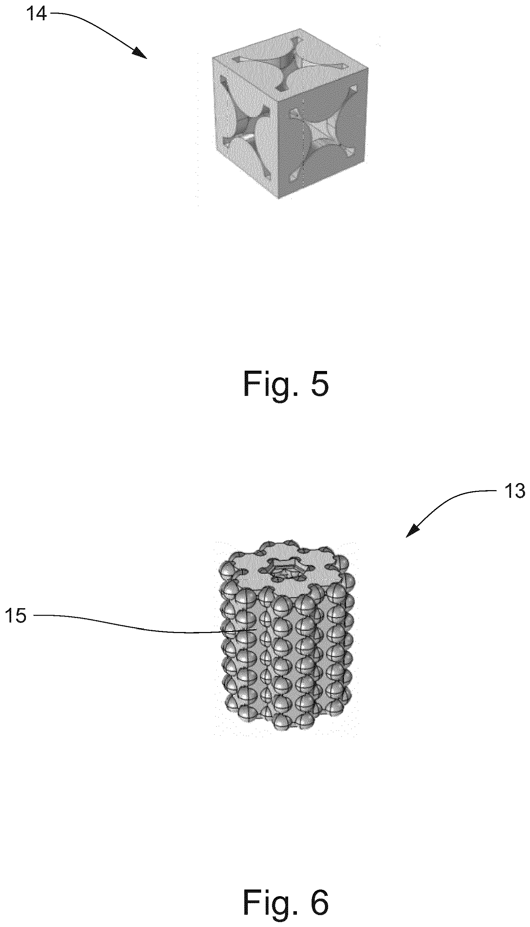

Fig. 5 zeigt ein Beispiel einer Elementarzelle 14 eines kubischen phononischen Kristalls 13. Der phononische Kristall 13 wird mit seinem periodischen Aufbau erhalten, indem eine Vielzahl der Elementarzellen 14 dicht aneinander gereiht werden. Die vollständige geometrische Beschreibung liegt jedoch alleine schon mit der Beschreibung nur der Elementarzelle 14 vor. Es ist ohne Weiteres vorstellbar, dass bei Aneinanderreihen mehrerer dieser Elementarzellen 14 aus den vorliegend aus Viertel-Kugeln bestehenden Massepunkten vollständige, geschlossene Sphären werden. Diese als "Kügelchen" 17 vorliegenden Massepunkte 16 sind durch die an den Eckpunkten der Elementarzelle 14 zusammenlaufenden Stege 18 miteinander verbunden. Bei realen Umsetzungen von phononischen Kristallen 13 sind diese Stege 18 natürlich konstruktiv erforderlich, da die Kügelchen 17 nicht frei im Raum schweben können. Dies ist zumindest dann der Fall, wenn der phononische Kristall 13 aus einem einphasigen Material hergestellt ist, wie vorliegend dargestellt. Die Stege 18 dienen zudem der Erhöhung der Festigkeit der Anordnung. Durch die Wahl der Dimensionierung der Stege 18 und der Massepunkte 16, vorliegend der Kügelchen 17, lässt sich die Massefehlanpassung zwischen den Stegen 18 und Massepunkten 16 einstellen. Es ist jedenfalls zu erkennen, dass zwischen den als Kügelchen 17 ausgestalteten Massepunkten 16 Freiräume in dem phononischen Kristall 13 vorliegen, ein nach dieser Maßgabe realisierter phononischer Kristall 13 also gewissermaßen porös ist. Würde ein solcher poröser phononischer Kristall 13 als Teil des Wandlergehäuses 4 eines Ultraschallwandlers 1 eingesetzt werden, wäre ohne weitere Maßnahmen keine Dichtheit mehr zwischen dem Innenraum und dem Außenraum des Ultraschallwandlers 1 gegeben, insoweit nicht andere Abdichtungsmaßnahmen ergriffen worden sind.

In weiteren nicht dargestellten Ausgestaltungen können die Massepunkte 16 durch andere geometrische Strukturen, beispielsweise durch Kuben, realisiert sein.

Im Zusammenhang mit der Ausgestaltung des phononischen Kristalls 13 ist jedoch bei den Ausführungsbeispielen gemäß den Fig. 3, 4 und 6 bis 8 vorgesehen, dass die dort dargestellten phononischen Kristalle 13 eine geschlossene Hülle 15 aufweisen zur Abdichtung des Außenraums gegenüber dem Innenraum des Wandlergehäuses 4. In diesen Fällen sorgt also der so ausgestaltete phononische Kristall 13 selbst für eine Abdichtung des Wandlergehäuses 4, ohne dass zusätzliche Maßnahmen erforderlich sind. Zudem wird durch die Hülle 15 die mechanische Festigkeit des phononischen Kristalls 13 erhöht.

Die dargestellten Ausführungsbeispiele haben ebenfalls gemeinsam, dass die geschlossene Hülle 15 durch Hüllenmaterial in den Zwischenräumen zwischen den periodisch angeordneten Strukturelementen (Masseelemente 16, Stege 18) des phononischen Kristalls 13 realisiert sind, wobei das Hüllenmaterial in den Zwischenräumen zwischen den die Außenschicht des phononischen Kristalls bildenden Strukturelementen des phononischen Kristalls 13 vorgesehen ist. Dadurch wird bewirkt, dass das von außen gegen das Wandlergehäuse 4 angrenzende Medium nicht in die Zwischenräume des phononischen Kristalls 13 eindringen kann und insoweit auch das Schwingungsverhalten nicht durch das Medium beeinflusst werden kann.

In den Ausführungsbeispielen gemäß den Fig. 6 bis 8 ist die Hülle 15 ferner so ausgestaltet, dass das Hüllenmaterial in den Zwischenräumen zwischen den periodisch angeordneten Strukturelementen des phononischen Kristalls 13 so angeordnet ist, dass der durch das Hüllenmaterial realisierte Teil der geschlossenen Hülle 15 minimal ist. Dadurch wird der Einfluss des Hüllenmaterials auf die Schwingungseigenschaften des phononischen Kristalls 13 minimiert.

In den Ausführungsbeispielen gemäß den Fig. 6 bis 8 beruht der phononische Kristall 13 auf einer hexagonalen Anordnung, was vorteilhaft ist hinsichtlich des Verhältnisses von mechanischer Spannungsfestigkeit und Materialeinsatz.

Bei dem in Fig. 6 dargestellten phononischen Kristall 13 sind in Durchlaufungsrichtung der Schallwellen insgesamt sieben Kugellagen realisiert, die identisch aufgebaut und beabstandet sind, insoweit weist der phononische Kristall 13 genau eine interessierende Bandlücke auf.

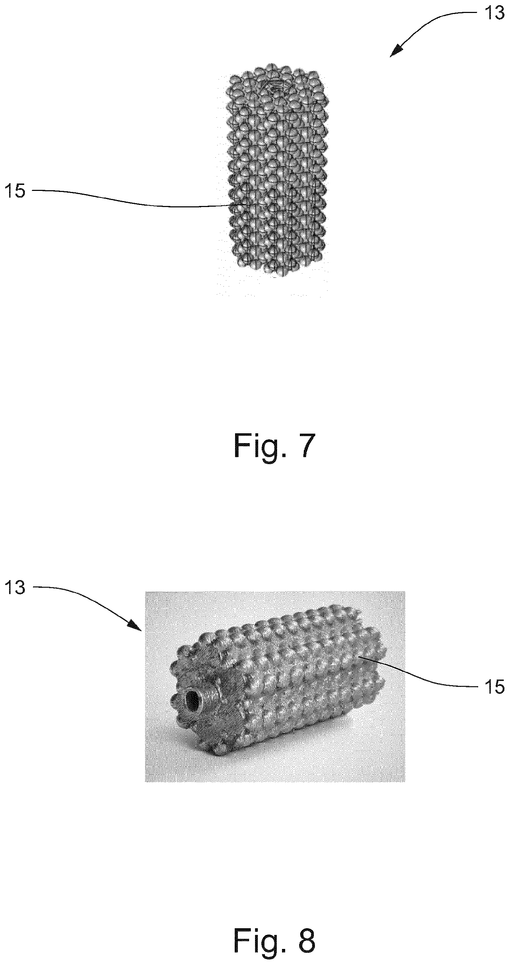

Bei dem Ausführungsbeispiel gemäß Fig. 7 sind hintereinanderliegend fünf Elementarzellschichten mit einer ersten Bandlücke mit einer Mittenfrequenz bei 1,03 MHz realisiert und weitere fünf Elementarzellschichten mit einer Bandlücke mit einer Mittenfrequenz bei 890 kHz. Die verschiedenen Bandlücken der hintereinander realisierten phononischen Kristalle 13 sind benachbart zueinander und bilden daher eine gemeinsame große Bandlücke des phononischen Kristalls 13.

Bei dem Ausführungsbeispiel in Fig. 8 ist ein phononischer Kristall 13 zu sehen, der mit einem generativen Fertigungsverfahren hergestellt ist, vorliegend durch 3D-Metalldruck. Vorteilhaft ist hier, dass sowohl die phononische Kristallstruktur als auch die Hülle 15 in einem Herstellungsschritt gefertigt werden können.

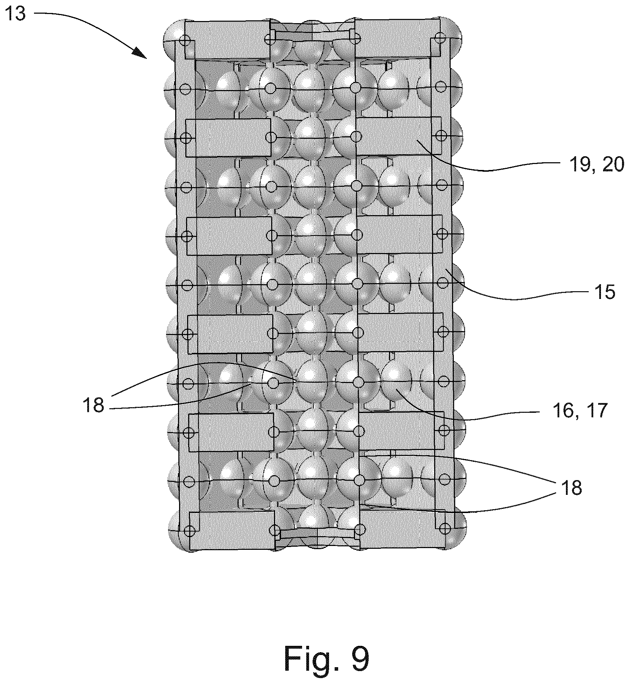

In Fig. 9 ist ein Querschnitt durch einen phononischen Kristall 13 zu sehen. Bei dem hier dargestellten phononischen Kristall 13 sind in Durchlaufrichtung der Schallwellen elf Kugellagen realisiert, die - wie in dem in Fig. 6 dargestellten Ausführungsbeispiel - identisch aufgebaut und beabstandet sind. Der phononische Kristall 13 ist nach außen hin durch die Hülle 15 abgedichtet. Die durch die Kügelchen 17 realisierten Massepunkte 16 sind durch die Stege 18 miteinander verbunden, wobei die Verbindungen zwischen benachbarten Kügelchen 17 sowohl innerhalb einer Kugellage als auch zwischen zwei Kugellagen realisiert sind. Zur weiteren Erhöhung der mechanischen Stabilität sind in den phononischen Kristall 13 Verstärkungselemente 19 in Form von Verstärkungsplatten 20 integriert. Die Verstärkungsplatten 20 sind vorliegend in jede zweite Kugellage des phononischen Kristalls 13 integriert und verbinden zudem zwei nicht unmittelbar benachbarte in Form von Kügelchen 17 realisierte Massepunkte 16 einer Kugellage miteinander.

### Bezugszeichen

- 1: Ultraschallwandler
- 2: Ultraschalldurchflussmessgerät
- 3: Steuer- und Auswerteeinheit
- 4: Wandlergehäuse
- 5: Wandlerelement
- 6: Ultraschallfenster
- 7: Ultraschallsignale / Nutzsignale
- 8: Befestigungsabschnitt
- 9: Messrohr
- 10: Übergangsabschnitt
- 11: Gehäusewellen / Störsignale
- 12: Dämpfungsbereich
- 13: phononischer Kristall
- 14: Elementarzelle eines phononischen Kristalls
- 15: Hülle
- 16: Massepunkt
- 17: Kügelchen
- 18: Steg
- 19: Verstärkungselement
- 20: Verstärkungsplatte

## Patentansprüche

1. Ultraschallwandler (1) für ein Ultraschalldurchflussmessgerät (2), mit einem Wandlergehäuse (4) und mit einem in dem Wandlergehäuse (4) angeordneten Wandlerelement (5) zum Erzeugen und/oder Empfangen von Ultraschallsignalen (7) zumindest in einem Nutz-Frequenzbereich des Ultraschallwandlers (1), wobei das Wandlergehäuse (4) im Bereich des Wandlerelements (5) ein Ultraschallfenster (6) zum Übertragen der Ultraschallsignale (7) zwischen dem Innenraum und dem Außenraum des Wandlergehäuses (4) aufweist, wobei das Wandlergehäuse (4) einen Befestigungsabschnitt (8) zur Befestigung des Ultraschallwandlers (1) an einem Messrohr (9) aufweist, und wobei sich das Wandlergehäuse (4) mit einem Übergangsabschnitt (10) zwischen dem Ultraschallfenster (6) und dem Befestigungsabschnitt (8) erstreckt,
**dadurch gekennzeichnet,**
**dass** der Übergangsabschnitt (10) des Wandlergehäuses (4) in einem Dämpfungsbereich (12) wenigstens einen phononischen Kristall (13) mit einer akustischen Bandlücke in dem Nutz-Frequenzbereich des Ultraschallwandlers (1) aufweist, sodass die Übertragung von Ultraschallsignalen im Nutz-Frequenzbereich zwischen dem Ultraschallfenster (6) und dem Befestigungsabschnitt (8) zumindest gedämpft ist.

2. Ultraschallwandler (1) nach Anspruch 1, **dadurch gekennzeichnet, dass** der Dämpfungsbereich (12) zumindest entlang einer geschlossenen Umfangslinie im Übergangsabschnitt (10) ausgebildet ist, sodass jeder Weg zwischen dem Ultraschallfenster (6) und dem Befestigungsabschnitt (8) des Wandlergehäuses (4) durch den Dämpfungsbereich (12) führt.

3. Ultraschallwandler (1) nach Anspruch 1 oder 2, **dadurch gekennzeichnet, dass** der Dämpfungsbereich (12) im Befestigungsabschnitt (8) ausgebildet ist.

4. Ultraschallwandler (1) nach einem der Ansprüche 1 bis 3, **dadurch gekennzeichnet, dass** der phononische Kristall (13) durch periodisch angeordnete Strukturelemente realisiert ist, insbesondere durch Massepunkte (16) und Stege (18) realisiert ist, wobei die Stege (18) bevorzugt jeweils zwei benachbarte Massepunkte (16) miteinander verbinden.

5. Ultraschallwandler (1) nach Anspruch 4, **dadurch gekennzeichnet, dass** Versteifungselemente (19) - insbesondere in Form von Versteifungsplatten (20) - zur mechanischen Stabilisierung in den phononischen Kristall (13) integriert sind, insbesondere dass die Versteifungselemente (19) zwischen nicht unmittelbar benachbarten Massepunkten (16) angeordnet sind.

6. Ultraschallwandler (1) nach einem der Ansprüche 1 bis 5, **dadurch gekennzeichnet, dass** der phononische Kristall (13) eine geschlossene Hülle (15) aufweist zur Abdichtung des Außenraums gegenüber dem Innenraum des Wandlergehäuses (4).

7. Ultraschallwandler (1) nach Anspruch 6, **dadurch gekennzeichnet, dass** die geschlossene Hülle (15) durch Hüllenmaterial in den Zwischenräumen zwischen den periodisch angeordneten Strukturelementen des phononischen Kristalls (13) realisiert ist, insbesondere in den Zwischenräumen zwischen den die Außenschicht des phononischen Kristalls (13) bildenden Strukturelementen des phononischen Kristalls (13), bevorzugt durch Hüllenmaterial, das identisch ist mit dem Material des phononischen Kristalls (13).

8. Ultraschallwandler (1) nach Anspruch 7, **dadurch gekennzeichnet, dass** das Hüllenmaterial in den Zwischenräumen zwischen den periodisch angeordneten Strukturelementen des phononischen Kristalls (13) so angeordnet ist, dass der durch das Hüllenmaterial realisierte Teil der geschlossenen Hülle (15) minimal ist.

9. Ultraschallwandler (1) nach einem der Ansprüche 1 bis 8, **dadurch gekennzeichnet, dass** der phononische Kristall (13) eine einfache kubische Anordnung oder eine hexagonale Anordnung aufweist.

10. Ultraschallwandler (1) nach einem der Ansprüche 1 bis 9, **dadurch gekennzeichnet, dass** der Dämpfungsbereich (12) wenigstens zwei phononische Kristalle (13) mit voneinander verschiedenen akustischen Bandlücken aufweist, insbesondere wobei die voneinander verschiedenen akustischen Bandlücken benachbart zueinander sind.

11. Ultraschallwandler (1) nach Anspruch 10, **dadurch gekennzeichnet, dass** das die wenigstens zwei phononischen Kristalle (13) in Ausbreitungsrichtung der Ultraschallsignale durch den Dämpfungsbereich (12) gesehen hintereinander angeordnet sind.

12. Ultraschallwandler (1) nach einem der Ansprüche 1 bis 11, **dadurch gekennzeichnet, dass** zumindest der Dämpfungsbereich (12) durch ein generatives Fertigungsverfahren hergestellt ist, insbesondere durch 3D-Druck hergestellt ist.

13. Ultraschallwandler (1) nach einem der Ansprüche 1 bis 12, **dadurch gekennzeichnet, dass** zumindest der Dämpfungsbereich (12) aus Stahl oder Titan hergestellt ist.

14. Ultraschalldurchflussmessgerät (2) zur Bestimmung des Durchflusses eines Mediums, mit wenigstens zwei Ultraschallwandlern (1) und einem Messrohr (9), wobei die Ultraschallwandler (1) jeweils ein Wandlergehäuse (4) und ein in dem Wandlergehäuse (4) angeordnetes Wandlerelement (5) zum Erzeugen und/oder Empfangen von Ultraschallsignalen (7) zumindest in einem Nutz-Frequenzbereich des Ultraschallwandlers (1) aufweisen, wobei das Wandlergehäuse (4) im Bereich des Wandlerelements (5) ein Ultraschallfenster (6) zum Übertragen der Ultraschallsignale zwischen dem Innenraum und dem Außenraum des Wandlergehäuses (4) aufweist, wobei das Wandlergehäuse (4) einen Befestigungsabschnitt (8) zur Befestigung des Ultraschallwandlers (1) an einem Messrohr (9) aufweist, und wobei sich das Wandlergehäuse (4) mit einem Übergangsabschnitt (10) zwischen dem Ultraschallfenster (6) und dem Befestigungsabschnitt (8) erstreckt,
**dadurch gekennzeichnet,**
**dass** der Übergangsabschnitt (10) des Wandlergehäuses (4) wenigstens eines Ultraschallwandlers (1) gemäß den Merkmalen des Patentanspruchs 1 ausgebildet ist, nämlich in einem Dämpfungsbereich (12) wenigstens einen phononischen Kristall (13) mit einer akustischen Bandlücke in dem Nutz-Frequenzbereich des Ultraschallwandlers (1) aufweist, sodass die Übertragung von Ultraschallsignalen im Nutz-Frequenzbereich zwischen dem Ultraschallfenster (6) und dem Befestigungsabschnitt (8) zumindest gedämpft ist.

15. Ultraschalldurchflussmessgerät (2) nach Anspruch 14, **dadurch gekennzeichnet, dass** der wenigstens eine Ultraschallwandler (1) gemäß den Merkmalen des Kennzeichnungsteils wenigstens eines Anspruchs der Ansprüche 2 bis 13 ausgestaltet ist.

## Claims

1. Ultrasonic transducer (1) for an ultrasonic flowmeter (2), having a transducer housing (4) and having a transducer element (5) arranged in the transducer housing (4) for generating and/or receiving ultrasonic signals (7) at least in a useful frequency range of the ultrasonic transducer (1), wherein the transducer housing (4) has an ultrasound window (6) in the region of the transducer element (5) for transmitting the ultrasound signals (7) between the interior and the exterior of the transducer housing (4), wherein the transducer housing (4) has a fastening section (8) for fastening the ultrasonic transducer (1) to a measuring tube (9), and wherein the transducer housing (4) extends with a transition section (10) between the ultrasound window (6) and the fastening section (8)
**characterized in**
**that** the transition section (10) of the transducer housing (4) has, in an attenuation region (12), at least one phononic crystal (13) with an acoustic band gap in the useful frequency range of the ultrasound transducer (1), so that the transmission of ultrasonic signals in the useful frequency range between the ultrasound window (6) and the fastening section (8) is at least attenuated.

2. Ultrasonic transducer (1) according to claim 1, **characterized in that** the attenuation region (12) is formed at least along a closed circumferential line in the transition section (10) so that each path between the ultrasound window (6) and the fastening section (8) of the transducer housing (4) passes through the attenuation region (12).

3. Ultrasonic transducer (1) according to claim 1 or 2, **characterized in that** the attenuation region (12) is formed in the fastening section (8).

4. Ultrasonic transducer (1) according to one of claims 1 to 3, **characterized in that** the phononic crystal (13) is implemented by periodically arranged structural elements, in particular by mass points (16) and crosspieces (18), wherein the crosspieces (18) preferably connect two adjacent mass points (16) to one another.

5. Ultrasonic transducer (1) according to claim 4, **characterized in that** stiffening elements (19) - in particular in the form of stiffening plates (20) - are integrated for mechanical stabilization in the phononic crystal (13), in particular that the stiffening elements (19) are arranged between not immediately adjacent mass points (16).

6. Ultrasonic transducer (1) according to any one of claims 1 to 5, **characterized in that** the phononic crystal (13) has a closed cover (15) for sealing the outer space with respect to the inner space of the transducer housing (4).

7. Ultrasonic transducer (1) according to claim 6, **characterized in that** the closed cover (15) is implemented by cover material in the spaces between the periodically arranged structural elements of the phononic crystal (13), in particular in the spaces between the structural elements of the phononic crystal (13) forming the outer layer of the phononic crystal (13), preferably by cover material which is identical to the material of the phononic crystal (13).

8. Ultrasonic transducer (1) according to claim 7, **characterized in that** the cover material is arranged in the spaces between the periodically arranged structural elements of the phononic crystal (13) in such a way that the part of the closed cover (15) implemented by the cover material is minimal.

9. Ultrasonic transducer (1) according to any one of claims 1 to 8, **characterized in that** the phononic crystal (13) has a simple cubic arrangement or a hexagonal arrangement.

10. Ultrasonic transducer (1) according to any one of claims 1 to 9, **characterized in that** the attenuation region (12) has at least two phononic crystals (13) with mutually different acoustic band gaps, in particular wherein the mutually different acoustic band gaps are adjacent to one another.

11. Ultrasonic transducer (1) according to claim 10, **characterized in that** the at least two phononic crystals (13) are arranged one behind the other as seen in the propagation direction of the ultrasonic signals through the attenuation region (12).

12. Ultrasonic transducer (1) according to any one of claims 1 to 11, **characterized in that** at least the attenuation region (12) is produced by a generative manufacturing process, in particular is produced by 3D printing.

13. Ultrasonic transducer (1) according to any one of claims 1 to 12, **characterized in that** at least the attenuation region (12) is made of steel or titanium.

14. Ultrasonic flowmeter (2) for determining the flow of a medium, having at least two ultrasonic transducers (1) and a measuring tube (9), wherein the ultrasonic transducers (1) each have a transducer housing (4) and a transducer element (5) arranged in the transducer housing (4) for generating and/or receiving ultrasonic signals (7) at least in a useful frequency range of the ultrasonic transducer (1), wherein the transducer housing (4) has an ultrasound window (6) in the region of the transducer element (5) for transmitting the ultrasound signals between the interior and the exterior of the transducer housing (4), wherein the transducer housing (4) has a fastening section (8) for fastening the ultrasound transducer (1) to a measuring tube (9), and wherein the transducer housing (4) extends with a transition section (10) between the ultrasound window (6) and the fastening section (8)
**characterized in**
**that** the transition section (10) of the transducer housing (4) of at least one ultrasound transducer (1) has, in an attenuation region (12), at least one phononic crystal (13) with an acoustic band gap in the useful frequency range of the ultrasound transducer (1), so that the transmission of ultrasound signals in the useful frequency range between the ultrasound window (6) and the fastening section (8) is at least attenuated.

15. Ultrasonic flowmeter (2) according to claim 14, **characterized in that** the at least one ultrasonic transducer (1) is designed according to the features of the characterizing portion of at least one claim of claims 2 to 13.

## Revendications

1. Transducteur à ultrasons (1) destiné à un débitmètre à ultrasons (2), comprenant un boîtier de transducteur (4) et un élément transducteur (5) disposé dans le boîtier de transducteur (4) et servant à générer et/ou à recevoir des signaux ultrasonores (7) au moins dans une plage de fréquences utiles du transducteur à ultrasons (1), dans lequel le boîtier de transducteur (4) présente dans la zone de l'élément transducteur (5) une fenêtre à ultrasons (6) pour transmettre les signaux ultrasonores (7) entre l'intérieur et l'extérieur du boîtier de transducteur (4), dans lequel le boîtier de transducteur (4) présente une portion de fixation (8) pour fixer le transducteur à ultrasons (1) à un tube de mesure (9), et dans lequel le boîtier de transducteur (4) s'étend avec une portion de transition (10) entre la fenêtre à ultrasons (6) et la portion de fixation (8),
**caractérisé en ce que** la portion de transition (10) du boîtier de transducteur (4) présente dans une zone d'atténuation (12) au moins un cristal phononique (13) à bande interdite acoustique dans la plage de fréquences utiles du transducteur à ultrasons (1) de sorte que la transmission de signaux ultrasonores dans la plage de fréquences utiles entre la fenêtre à ultrasons (6) et la portion de fixation (8) est au moins atténuée.

2. Transducteur à ultrasons (1) selon la revendication 1, **caractérisé en ce que** la zone d'atténuation (12) est réalisée au moins le long d'une ligne circonférentielle fermée dans la portion de transition (10) de sorte que chaque trajet entre la fenêtre à ultrasons (6) et la portion de fixation (8) du boîtier de transducteur (4) passe par la zone d'atténuation (12).

3. Transducteur à ultrasons (1) selon la revendication 1 ou 2, **caractérisé en ce que** la zone d'atténuation (12) est réalisée dans la portion de fixation (8).

4. Transducteur à ultrasons (1) selon l'une quelconque des revendications 1 à 3, **caractérisé en ce que** le cristal phononique (13) est réalisé par des éléments structurels disposés périodiquement, en particulier par des points de masse (16) et des barrettes (18), les barrettes (18) reliant de préférence respectivement deux points de masse (16) l'un à l'autre.

5. Transducteur à ultrasons (1) selon la revendication 4, **caractérisé en ce que** des éléments de renforcement (19) - en particulier sous la forme de plaques de renforcement (20) - sont intégrés dans le cristal phononique (13) pour la stabilisation mécanique, en particulier **en ce que** les éléments de renforcement (19) sont disposés entre des points de masse (16) qui ne sont pas directement voisins.

6. Transducteur à ultrasons (1) selon l'une quelconque des revendications 1 à 5, **caractérisé en ce que** le cristal phononique (13) présente une enveloppe fermée (15) pour rendre étanche l'extérieur par rapport à l'intérieur du boîtier de transducteur (4).

7. Transducteur à ultrasons (1) selon la revendication 6, **caractérisé en ce que** l'enveloppe fermée (15) est réalisée par un matériau d'enveloppe dans les intervalles entre les éléments structurels, disposés périodiquement, du cristal phononique (13), en particulier dans les intervalles entre les éléments structurels du cristal phononique (13) formant la couche extérieure du cristal phononique (13), de préférence par un matériau d'enveloppe qui est identique au matériau du cristal phononique (13).

8. Transducteur à ultrasons (1) selon la revendication 7, **caractérisé en ce que** le matériau d'enveloppe est disposé dans les intervalles entre les éléments structurels, disposés périodiquement, du cristal phononique (13) de telle sorte que la partie réalisée par le matériau d'enveloppe de l'enveloppe (15) est minimale.

9. Transducteur à ultrasons (1) selon l'une quelconque des revendications 1 à 8, **caractérisé en ce que** le cristal phononique (13) présente un agencement cubique simple ou un agencement hexagonal.

10. Transducteur à ultrasons (1) selon l'une quelconque des revendications 1 à 9, **caractérisé en ce que** la zone d'atténuation (12) présente au moins deux cristaux phononiques (13) ayant des bandes interdites acoustiques différentes les unes des autres, en particulier dans lequel les bandes interdites acoustiques différentes les unes des autres sont voisines les unes des autres.

11. Transducteur à ultrasons (1) selon la revendication 10, **caractérisé en ce que** les au moins deux cristaux phononiques (13) sont disposés l'un après l'autre, vus dans la direction de propagation des signaux ultrasonores à travers la zone d'atténuation (12) .

12. Transducteur à ultrasons (1) selon l'une quelconque des revendications 1 à 11, **caractérisé en ce qu'**au moins la zone d'atténuation (12) est fabriquée par un procédé de fabrication génératif, en particulier par impression 3D.

13. Transducteur à ultrasons (1) selon l'une quelconque des revendications 1 à 12, **caractérisé en ce qu'**au moins la zone d'atténuation (12) est fabriquée en acier ou en titane.

14. Débitmètre à ultrasons (2) permettant de déterminer le débit d'un fluide, comprenant au moins deux transducteurs à ultrasons (1) et un tube de mesure (9), les transducteurs à ultrasons (1) présentant respectivement un boîtier de transducteur (4) et un élément transducteur (5) disposé dans le boîtier de transducteur (4) pour générer et/ou recevoir des signaux ultrasonores (7) au moins dans une plage de fréquences utiles du transducteur à ultrasons (1), dans lequel le boîtier de transducteur (4) présente dans la zone de l'élément transducteur (5) une fenêtre à ultrasons (6) pour transmettre les signaux ultrasonores entre l'intérieur et l'extérieur du boîtier de transducteur (4), dans lequel le boîtier de transducteur (4) présente une portion de fixation (8) pour fixer le transducteur à ultrasons (1) à un tube de mesure (9), et dans lequel le boîtier de transducteur (4) s'étend avec une portion de transition (10) entre la fenêtre à ultrasons (6) et la portion de fixation (8),
**caractérisé en ce que** la portion de transition (10) du boîtier de transducteur (4) d'au moins un transducteur à ultrasons (1) est réalisée selon les particularités de la revendication 1, présentant notamment dans une zone d'atténuation (12) au moins un cristal phononique (13) à bande interdite acoustique dans la plage de fréquences utiles du transducteur à ultrasons (1) de sorte que la transmission des signaux ultrasonores dans la plage de fréquences utiles entre la fenêtre à ultrasons (6) et la portion de fixation (8) est au moins atténuée.

15. Débitmètre à ultrasons (2) selon la revendication 14, **caractérisé en ce que** ledit au moins un transducteur à ultrasons (1) est configuré selon les particularités de la partie caractérisante d'au moins une revendication des revendications 2 à 13.
